# EUROPEAN PATENT APPLICATION

(11) **EP 1 895 381 A1**
(43) Date of publication of application: **05.03.2008**
(21) Application number: 06119661.4
(22) Date of filing: 28.08.2006
(51) Int. Cl.: G06F 1/16

(54) **Hybrid portrait-landscape handheld device with trackball navigation and qwerty hide-away keyboard**

(71) Applicant: Research In Motion Limited, Waterloo, Ontario N2L 3W8 (CA)
(72) Inventor: Griffin, Jason T., Kitchener, Ontario, N2P 2L3 (CA); Rak, Roman, P., Waterloo, Ontario, N2T 2V8 (CA)
(74) Representative: Hibbert, Juliet Jane Grace

(57) **Abstract**

A device is disclosed for use in two different orientations. In one orientation, the keyboard is exposed to the user. This orientation is named the landscape orientation because the device will be positioned such that its width is larger than its height. The user would opt for the landscape orientation for tasks that require the keyboard, such as inputting data, drafting emails, sending emails, and other functions typically associated with a standard computer. The other orientation is named the portrait orientation because the device will be positioned such that its height is larger than its width. In addition, the keyboard is not used in this orientation and therefore hidden away. The user would opt for the portrait orientation for tasks such as making and receiving telephone calls and for reading documents and emails. The device detects the orientation positioned by the user and modifies the elements shown on the display screen so that they are presented in the correct orientation to the user.

## Description

### FIELD

This disclosure relates to the versatile nature of a handheld electronic device having a trackball navigation tool and a hide-away QWERTY keyboard. Specifically, when the device is being used for purposes that require use of a QWERTY keyboard or in which the user would prefer viewing the device from a landscape perspective, the device should be oriented such that the trackball is stationed at a lateral side of a front display screen of the device. When the device is being used for purposes that do not require use of a QWERTY keyboard or in which the user would prefer viewing the device in a portrait perspective, the keyboard can be hidden away and the device should be oriented such that the trackball is stationed at the bottom of the device for operator manipulation that does not obstruct the view of the display screen.

### BACKGROUND

With the advent of more feature-rich wireless communications systems, compatible handheld communication devices are becoming more prevalent, as well as advanced in functionality. In a broader sense, these devices are referred to as handheld electronic devices, which include devices without communication functions. While in the past such handheld communication devices typically accommodated either voice (cell phones) or text transmission (pagers and PDAs), today's consumer often demands a combination device capable of performing both types of transmissions, including sending and receiving e-mail. The suppliers of such mobile communication devices and underlying service providers are anxious to meet these demands, but the combination of voice and textual messaging, as well as other functionalities such as those found in PDAs have caused designers to have to improve the means by which information is input into the devices by the user, as well as provide better facilitation for the user to navigate within the menus and icon presentations necessary for efficient user interface with these more complicated devices.

Portable handheld communication devices of the types intimated above typically have integrated keyboards that are often exposed on an exterior surface of the device. By the nature of this configuration, the exposed keyboards can be easily unintentionally actuated by "bumps" into the device.

For many reasons, screen icons are often utilized in such handheld communication devices as a way to allow users to make feature and/or function selections. Among other reasons, users are accustomed to such icon representations for function selection. A prime example is the personal computer "desktop" presented by Microsoft's Windows® operating system. Because of the penetration of such programs into the user markets, most electronics users are familiar with what is essentially the convention of icon-based functionality selections. Even with many icons presented on a personal computer's "desktop", however, user navigation and selection among the different icons is easily accomplished utilizing a conventional mouse and employing the point-and-click methodology. The absence of such a mouse from these handheld wireless communication devices, however, has necessitated that mouse substitutes be developed for navigational purposes. Mouse-type functionalities are needed for navigating and selecting screen icons, for navigating and selecting menu choices in "drop down" type menus, and also for just moving a "pointer" type cursor across the display screen.

Therefore, a need exists for a handheld electronic device to offer more functions to the user and still maintain its compact size. Specifically, such a device would permit use of a standard QWERTY keyboard as well as a trackball for navigation purposes. The user would be able to prevent inadvertent key-depression and reduce the overall size of the device for convenience without affecting the size of the display screen. In addition, this device would make more efficient use of the screen by not limiting the display to one static perspective, rather the user would have the choice to view the display screen from two different perspectives

### BRIEF DESCRIPTION OF THE DRAWINGS

Exemplary methods and arrangements conducted and configured according to the advantageous solutions presented herein are depicted in the accompanying drawings wherein:

FIG. 1A is a front plan view of the handheld electronic device in a closed configuration and portrait orientation;

FIG. 1B is a perspective view of the handheld electronic device in a closed configuration and portrait orientation;

FIG. 1C is a perspective view of the handheld electronic device in an open configuration and landscape orientation;

FIG. ID is a front plan view of the handheld electronic device in an open configuration and landscape orientation;

FIG. 1E is a front plan view of another embodiment of the handheld electronic device in an open configuration and landscape orientation;

FIG. 2A is a left-side view of the handheld electronic device in a landscape orientation and closed configuration;

FIG. 2B is a left-side view of the handheld electronic device in a landscape orientation and open configuration;

FIG. 3A is a right-side view of the handheld electronic device in a landscape orientation and closed configuration;

FIG. 3B is a right-side view of the handheld electronic device in a landscape orientation and open configuration;

FIG. 4 is a left-side view of the handheld electronic device in a portrait orientation and closed configuration;

FIG. 5 is a right-side view of the handheld electronic device in a portrait orientation and closed configuration;

FIG. 6A is an exploded perspective view of the top member of an exemplary wireless handheld electronic device incorporating a trackball assembly;

FIG. 6B is an exploded perspective view of the bottom member of an exemplary wireless handheld electronic device;

FIG. 7 illustrates an exemplary QWERTY keyboard layout;

FIG. 8 illustrates an exemplary QWERTZ keyboard layout;

FIG. 9 illustrates an exemplary AZERTY keyboard layout;

FIG. 10 illustrates an exemplary Dvorak keyboard layout;

FIG. 11 illustrates a QWERTY keyboard layout paired with a traditional ten-key keyboard;

FIG. 12 illustrates ten digits comprising the numerals 0-9 arranged as on a telephone keypad, including the * and # astride the zero;

FIG. 13 illustrates a numeric phone key arrangement according to the ITU Standard E.161 including both numerals and letters;

FIG. 14 is a detail view of a full QWERTY keyboard;

FIG. 15 is a front view of an exemplary handheld electronic device including a reduced QWERTY keyboard;

FIG. 16 is a detail view of a reduced QWERTY keyboard; and

FIG. 17 is a block diagram representing a wireless handheld communication device interacting in a communication network.

### DETAILED DESCRIPTION

As intimated hereinabove, one of the more important aspects of the handheld electronic device to which this disclosure is directed is its size. Users are likely to grasp the device in both hands, particularly when the device is in landscape orientation. When holding the device in a 'portrait' orientation, however, it is intended that a predominance of users will cradle the device in one hand in such a manner that input and control over the device can be affected using the thumb of the same hand in which the device is held. (Portrait orientation and landscape orientation will be described hereinbelow.) Therefore the size of the device must be kept relatively small; of its dimensions, limiting the width of the device is most important with respect to assuring cradleability in a user's hand. Moreover, it is preferred that the width of the device be maintained at less than ten centimeters (approximately four inches). Keeping the device within these dimensional limits allows for the device to remain a hand cradleable unit in the portrait orientation that users prefer for its usability and graspability. Limitations with respect to the height (length) of the device are less stringent since it does not bear on whether the device is hand-cradleable. Therefore, in order to gain greater size, the device can be advantageously configured so that its height is greater than its width (in a portrait orientation), but still remain easily supported and operated in one hand.

A potential problem is presented by the small size of the device in that there is limited exterior surface area for the inclusion of user input and device output features. This is especially true for the "prime real estate" of the front face of the device where it is most advantageous to include a display screen that displays information to the user and which in the landscape orientation, is preferably above a keyboard utilized for data entry into the device by the user. If the screen is provided below the keyboard, a problem occurs in being able to see the screen while inputting data. Therefore it is preferred that the display screen be above the input area thereby solving the problem by assuring that the hands and fingers do not block the view of the screen during data entry periods.

To facilitate textual data entry, an alphabetic keyboard is provided for use in the landscape orientation. In one version, a full alphabetic keyboard is utilized in which there is one key per letter. This is preferred by some users because it can be arranged to resemble a standard keyboard with which they are most familiar. In this regard, the associated letters can be advantageously organized in QWERTY, QWERTZ or AZERTY layouts, among others, thereby capitalizing on certain users' familiarity with these special letter orders. In order to stay within the bounds of a limited front surface area, however, each of the keys must be commensurately small when, for example, twenty-six keys must be provided in the instance of the English language. An alternative configuration is to provide a reduced keyboard in which at least some of the keys have more than one letter associated therewith. This means that fewer keys can be included which makes it possible for those fewer keys to each be larger than in the instance when a full keyboard is provided on a similarly dimensioned device. Some users will prefer the solution of the larger keys over the smaller ones, but it is necessary that software or hardware solutions be provided in order to discriminate which of the several associated letters the user intends based on a particular key actuation; a problem the full keyboard avoids. Preferably, this character discrimination is accomplished utilizing disambiguation software accommodated within the device. As with the other software programs embodied within the device, a memory and microprocessor are provided within the body of the handheld unit for receiving, storing, processing, and outputting data during use. Therefore, the problem of needing a textual data input means is solved by the provision of either a full or reduced alphabetic keyboard on the presently disclosed handheld electronic device.

Keys, typically of a push-button or push-pad nature, perform well as data entry devices but present problems to the user when they must also be used to affect navigational control over a screen-cursor. In order to solve this problem the present handheld electronic device preferably includes an auxiliary input that acts as a cursor navigational tool and which is also exteriorly located upon the front face of the device. Its front face location is particularly advantageous because it makes the tool easily thumb-actuable like the keys of the keyboard. A particularly usable embodiment provides the navigational tool in the form of a trackball which is easily utilized to instruct two-dimensional screen cursor movement in substantially any direction, as well as act as an actuator when the ball of the trackball is depressible like a button. The placement of the trackball is preferably above the keyboard and, depending on the device's orientation, below or to the side of the display screen; here, it avoids interference during keyboarding and does not block the user's view of the display screen during use.

In some configurations, the handheld electronic device may be standalone in that it does not connect to the "outside world." One example would be a PDA mode that stores such things as calendars and contact information, but does not necessarily synchronize or communicate with other devices. In most situations, such isolation will be viewed as a detriment in that at least synchronization is a highly desired characteristic of handheld devices today. Moreover, the utility of the device is significantly enhanced when connectable within a system, and particularly when connectable on a wireless basis in a system in which both voice and text messaging are accommodated.

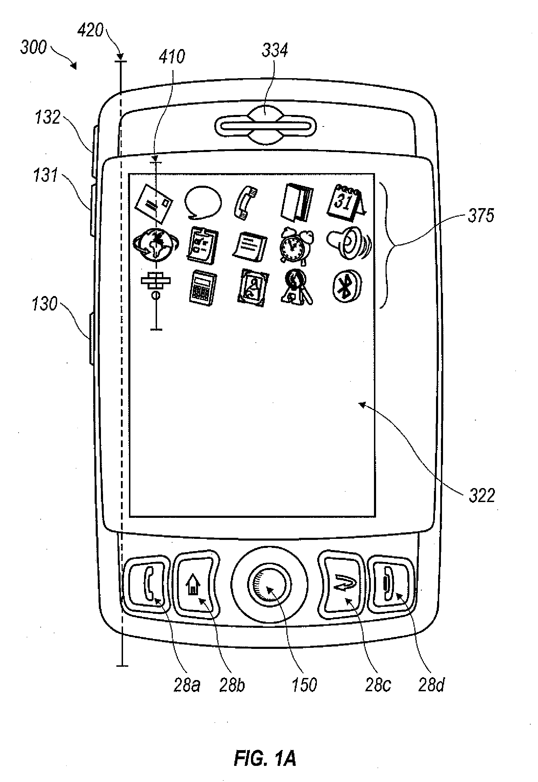

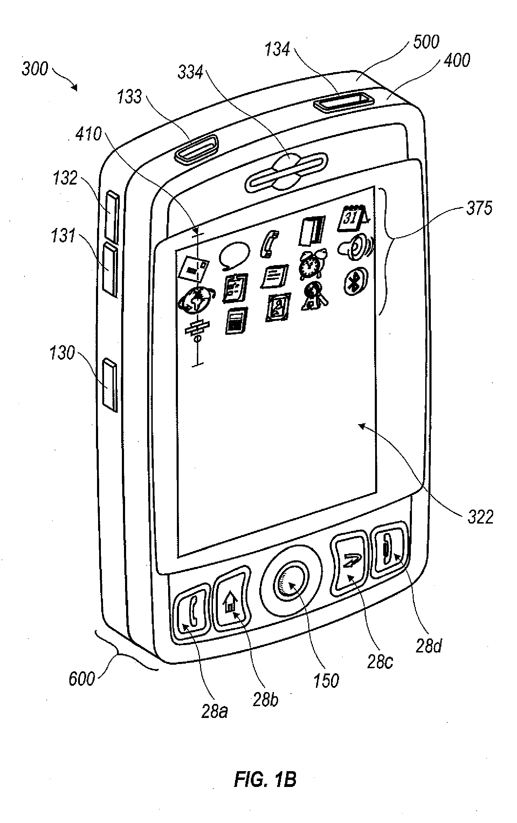

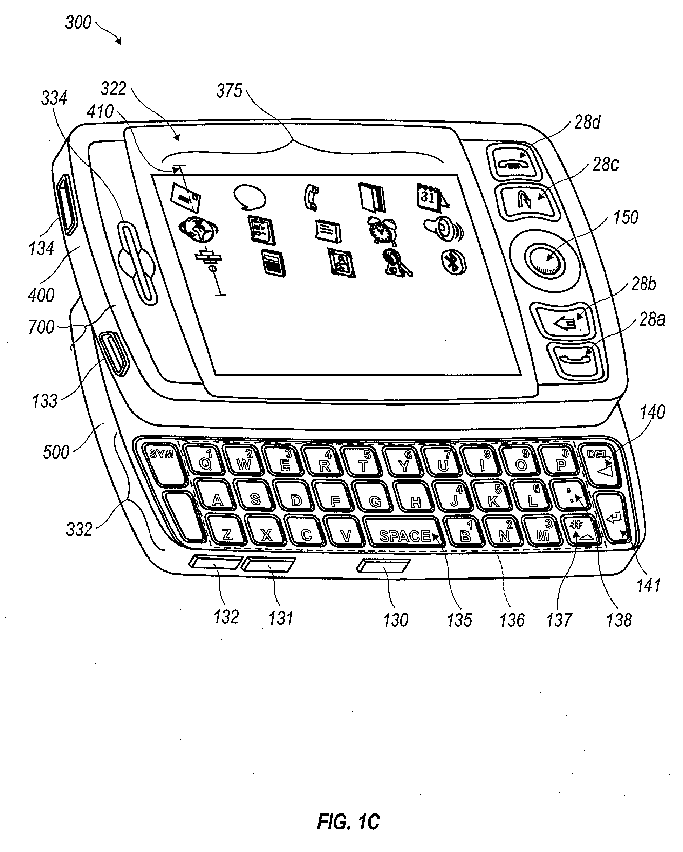

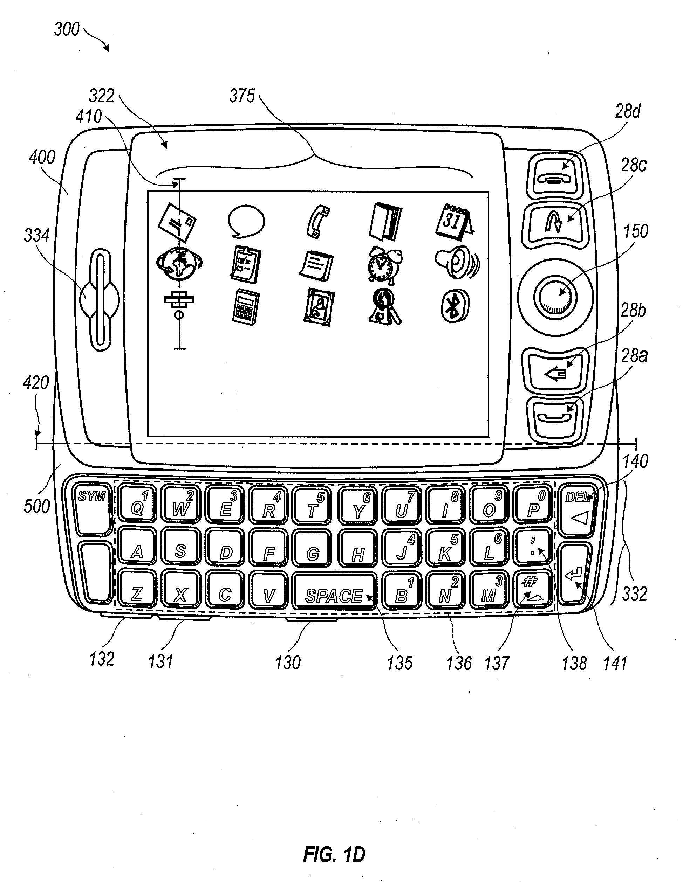

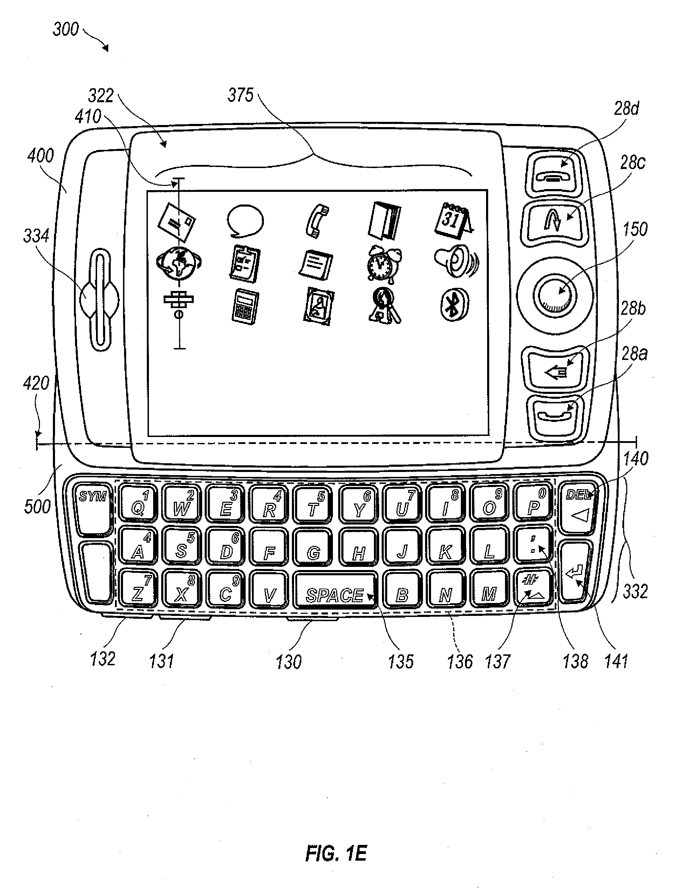

This disclosure relates broadly to a general interest in bettering the user's overall interaction with the handheld electronic device 300. Engineers seek to enhance device versatility and thereby improve the relationship between software applications and hardware design. This is first achieved by expanding the functionality of the device's hardware such that it can be used in two orientations - a 'landscape' or horizontal orientation (FIGS. 1C, 1D, and 1E) and a 'portrait' or vertical orientation (FIGS. 1A and 1B). In a 'landscape' orientation, the device 300 most resembles a standard computer as the trackball 150 is situated towards the right side of the device 300 and the QWERTY keyboard 332 is arranged along the bottom of the device 300. Likewise, in the 'landscape' orientation, the device 300 is best suited for the typical applications that lend themselves to using a standard computer with a QWERTY keyboard 332. Essentially, when the device 300 is in portrait orientation, the device 300 is configured for operation in a voice communication mode. Similarly, when the device 300 is in a landscape orientation, the device is configured for operation in a text messaging mode. In the 'portrait' orientation, the trackball 150 is positioned towards the bottom-center of the device 300 and proximate the narrow end of the display screen 322. Further, the QWERTY keyboard 332 need not be used and therefore may be hidden away by sliding the keyboard 332 underneath the display bearing component 400. This hide-away feature allows for the user to maintain the size of the display screen 322 while reducing the overall size of the device 300 itself and helps to prevent unintentional engagements with the keyboard 332. As such, viewing emails and attachments as well as using the telephone features represent some of the activities best suited for the device 300 in the portrait orientation.

Since the device 300 is intended to be used in two different orientations, its software capabilities must be appropriately adapted. First, the software, must be able to determine the orientation of the device 300, whether it is in a 'portrait' or 'landscape' orientation, so that data displayed on the screen 322 is in the correct perspective. Second, given that the display screen 322 is not square but rectangular, the software must be able to format data shown on the screen 322 so that it conforms to the dimensions of the screen 322. Specifically, when the device 300 is in a 'landscape' orientation, the display screen 322 will be of greater width and lesser height. In contrast, when the device 300 is in a 'portrait' orientation, the display screen 322 will be of lesser width and greater height. Such software capabilities are necessary in order to render full use of the screen 322 and view material legibly. Therefore, internal recognition of the device's 300 orientation is necessary. Linking software recognition of device orientation to keyboard position is one example. Specifically, a hidden keyboard 332 would trigger the device software to recognize that the device 300 is in a 'portrait' orientation. A fully visible keyboard 332 would trigger the device software to recognize that the device 300 is in a 'landscape' orientation. Linking the software recognition of device orientation to an external or internal orientation-determinative switch, such as a mercury switch, within the device 300, is another example. In addition to these two examples offered, it is acknowledged that one skilled in the art could employ other measures, and such measures are considered within the scope of this disclosure.

Handheld mobile communication devices 300, variously configured as described above, have a closed configuration in which the display bearing component or top member 400 of the device 300 entirely covers the face of the keyboard 332 bearing component or bottom member 500 of the device 300, and an open configuration in which the text-input keyboard 332 on the face of the bottom member 500 is accessible. The top member 400 and bottom member 500, which comprise the body assembly, are substantially planar and oblong in shape and are interconnected by a coupling connection that maintains the components 400, 500 in a substantially parallel orientation and limits the members to linear translational movement. In the closed configuration, the device 300 has an overlaid configuration in which the top member 400 is located substantially directly over the bottom member 500 and in substantial registration therewith. In addition, the display screen 322 has a height greater than the width thereof when the device 300 is held in a portrait orientation 600. The device 300 is in the open landscape orientation 700 or the text communicating orientation, when the lower portion of the bottom member 500 is repositioned such that the keyboard 332 is exposed for operator use. The display screen 322 has a width greater than height thereof when the device 300 is held in a landscape orientation 700. Transitioning between the landscape orientation 700 and portrait orientation 600 is achieved by making a ninety degree rotation of the device 300 by the operator. From a front plan view of the open configuration, the keyboard 332, which is of the bottom member 500, will be positioned below the trackball navigation tool or trackball 150, which is on the front face of the top member 400, located adjacent the display screen 322, and fully visible to the user; the top portion of the bottom member 500 will still be covered by the top member 400, but the keyboard 332 on the lower portion of the bottom member 500 will be exposed. The trackball 150 is configured to affect cursor navigation on the display screen 322 by an operator during use. However, unlike clamshell-type cellular phones, the display member 400 does not simply flip open about a conventional pivot joint. Rather, it moves from its closed configuration, where it is substantially parallel and adjacent to the keypad member 500, to its open configuration through a sliding motion.

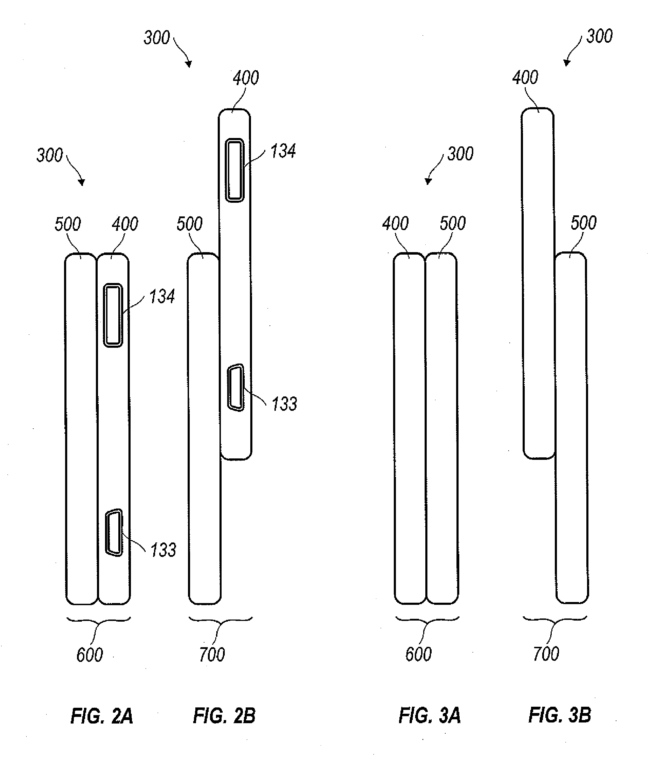

Given the embodiments described above, it should still be appreciated that while the instant disclosure describes one or more preferred embodiments for a hybrid portrait-landscape handheld device 300 with hide-away keyboard 332 and trackball navigation 328, such embodiments are presented solely for purposes of illustration and the scope of the appended claims is not intended to be limited to the specific embodiments described in the instant disclosure or illustrated in the accompanying drawings. Additionally and hereinbelow, it should be appreciated that the terms "portrait" and "landscape" are intended to refer to the device's orientations 600, 700, respectively. These orientations are illustrated in FIGS. 1A, 1B, 1C, 1D, 1E, 2A, 2B, 3A, and 3B. Specifically, the device 300 is in its portrait orientation 600 when the keyboard 332 is hidden away and the trackball 150 is stationed at the bottom center below the display screen 322. The device 300 is in its landscape orientation 700 when the keyboard 332 on the bottom member 500 is fully exposed to the user and the trackball 150 is stationed to the right of the display screen 322.

As used herein, the term handheld electronic device 300 describes a relatively small device 300 that is capable of being held in a user's hand. It is a broad term that includes devices that are further classified as handheld communication devices 300, which interact with a communications network 319. (Reference numeral 300 is used throughout to refer generally to a handheld device, even where different embodiments are being described. Similarly, other reference numerals (e.g., reference numeral 328 for the navigation tool) are used consistently from one embodiment to another.)

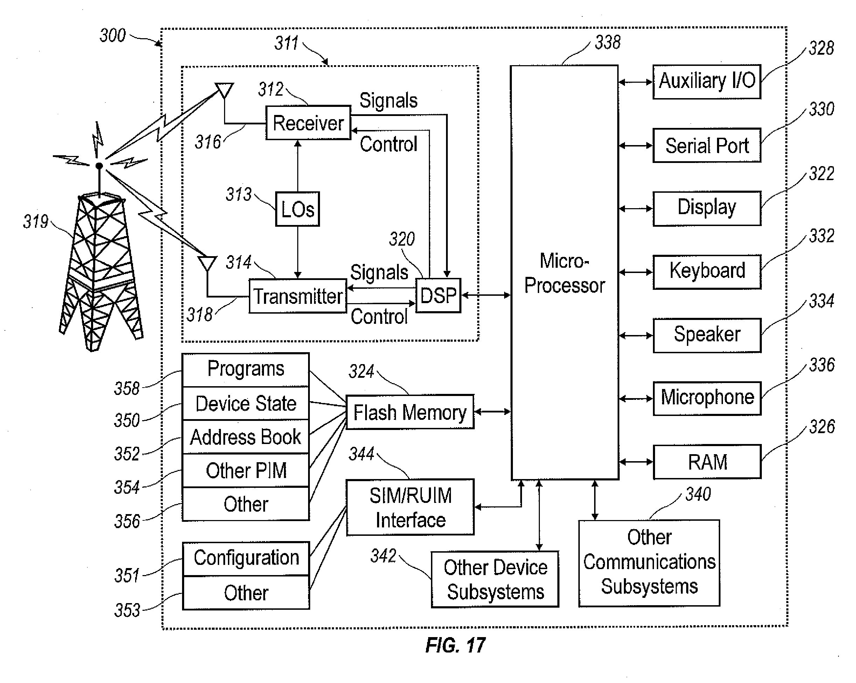

As depicted in FIG. 17, the handheld communication device 300 can transmit data to and receive data from a communication network 319 utilizing radio frequency signals, details of which are discussed more fully herein below. Preferably, the data transmitted between the handheld communication device 300 and the communication network 319 supports voice and textual messaging.

As illustrated in FIGS. 1A and 1B, the handheld electronic device 300 in portrait orientation 600 includes a lighted display 322 located above the trackball 150 and below the speaker 334. Buttons 130, 131, 132 protrude on the left side of the bottom member 500. Buttons 28a, 28b are positioned to the left of the trackball 150 and buttons 28c, 28d are positioned to the right of the trackball 150. Buttons 28a, 28b, 28c, 28d are likely, but not limited, to be assigned telephone functions, as telephone capabilities are intended to be used when the device 300 is in the portrait orientation 600. Button 28a exemplifies a call/send function. Button 28b exemplifies a home/menu option. Button 28c exemplifies an escape function. Button 28d exemplifies an end/disconnect function. Viewing email/documents can also be accomplished when the device 300 is in the portrait orientation 600. The icons 375 or other viewable matter will be displayed from the same perspective of the device 300 in portrait orientation 600. Specifically, the upright axis 410 of the icons 375 and other viewable matter on the display screen 322 is substantially parallel to the long axis 420 of the device 300 when it is in the portrait orientation 600 At the top of the device 300, on the top member 400, is a USB Port 133 and power-button 134. As shown, the device 300 is of dual body construction, but it is also contemplated that the device 300 may be of an alternative construction.

As illustrated in FIGS. 1C and 1D, the handheld electronic device 300 in landscape orientation 700 includes a lighted display 322 with a speaker 334 to its left and the trackball 150 and buttons 28a, 28b, 28c, 28d located to its right. From a top plan view, the keyboard 332 of the bottom member 500 is below the display screen 322. In this same view, the USB Port 133 and power-button 134, located on the top member 400, are positioned to the left of the speaker 334. In addition, the buttons 130, 131, 132, located on the bottom member 500, are positioned below the keyboard 332. Button 130 is a soft key. Button 131 is used to lower the volume projected by the speaker 334 and button 132 is used to raise the volume projected by the speaker 334. When the device is in the landscape orientation 700, it is most likely utilized for the purposes of text entry with use of the keyboard 332, transmitting and receiving text, and viewing email/documents on the display screen 322. The icons 375 or other viewable matter will be displayed on the screen 322 from the same perspective of the device 300 in its landscape orientation 700. Specifically, the upright axis 410 of the icons 375 and other viewable matter on the display screen 322 will be displayed substantially perpendicular to the long axis 420 of the device 300 when it is in the landscape orientation 700.

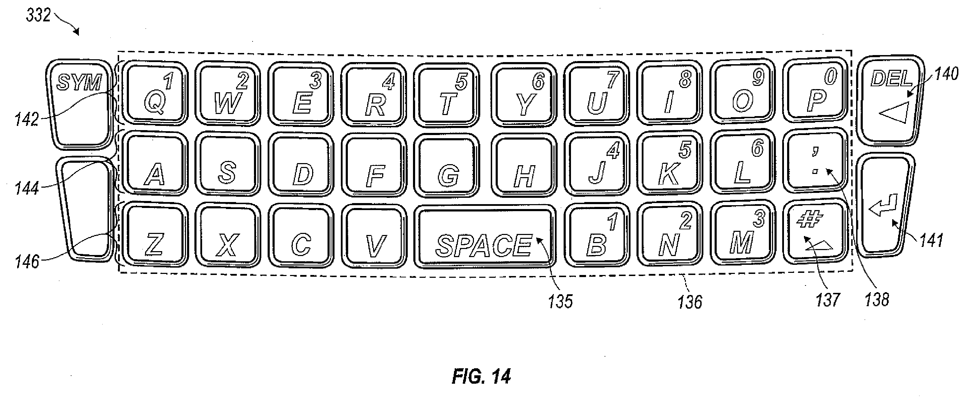

In the embodiments illustrated in FIGS. 1C and 1D, the keyboard 332 includes a plurality of keys with which alphabetic letters and numeric characters are associated on a one-letter-per-key basis. It is contemplated that the keys may be directly marked with letters, or the letters may be presented adjacent to, but clearly in association with, a particular key. Such one-to-one pairing between the letters and keys is depicted in FIGS. 1C, 1D and 14 and is described in greater detail below. In order to facilitate user input, the alphabetic letters are preferably configured in a familiar QWERTY, QWERTZ, AZERTY, or Dvorak layout, each of which is also discussed in greater detail hereinbelow.

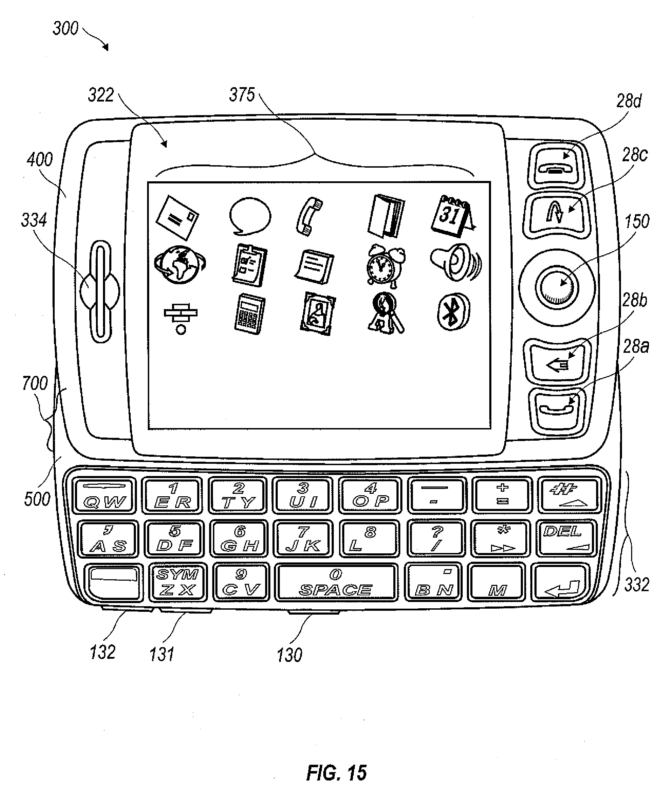

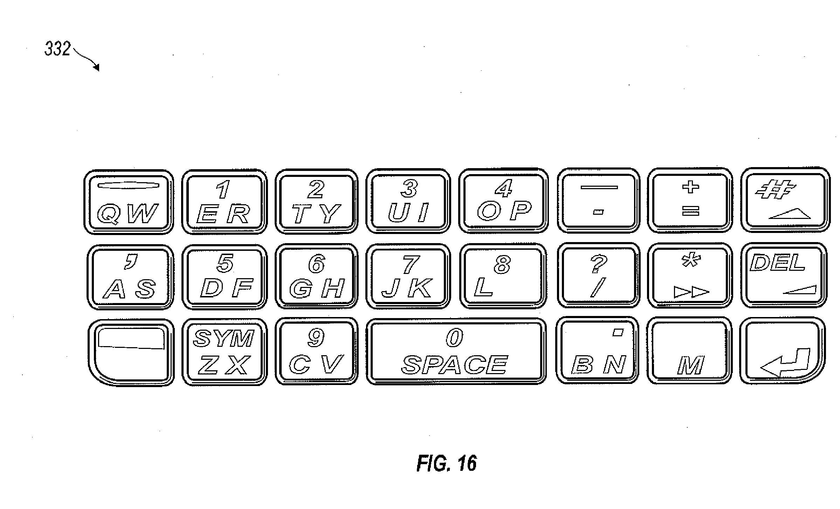

In an alternative embodiment, the keyboard 332 comprises a plurality of keys with which alphabetic letters are also associated, but at least a portion of the individual keys have multiple letters associated therewith. This type of configuration is referred to as a reduced keyboard (in comparison to the full keyboard described immediately above) and can, among others, come in QWERTY, QWERTZ, AZERTY, and Dvorak layouts. A reduced keyboard on the handheld device of this disclosure and a detail view of the reduced keyboard are illustrated in FIGS. 15 and 16.

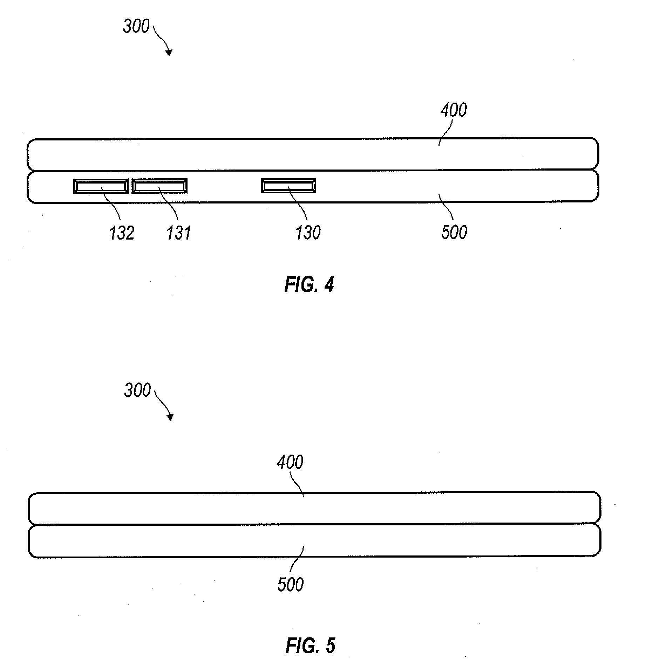

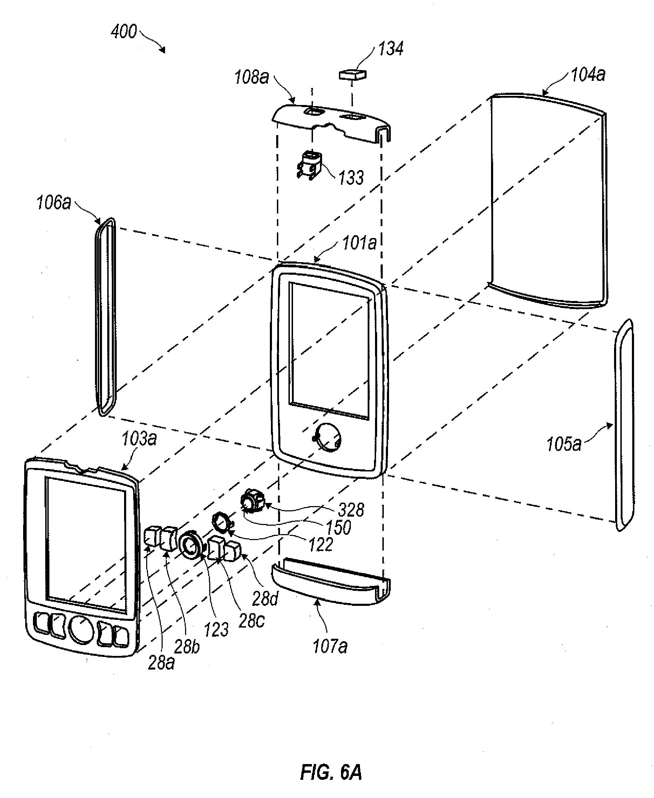

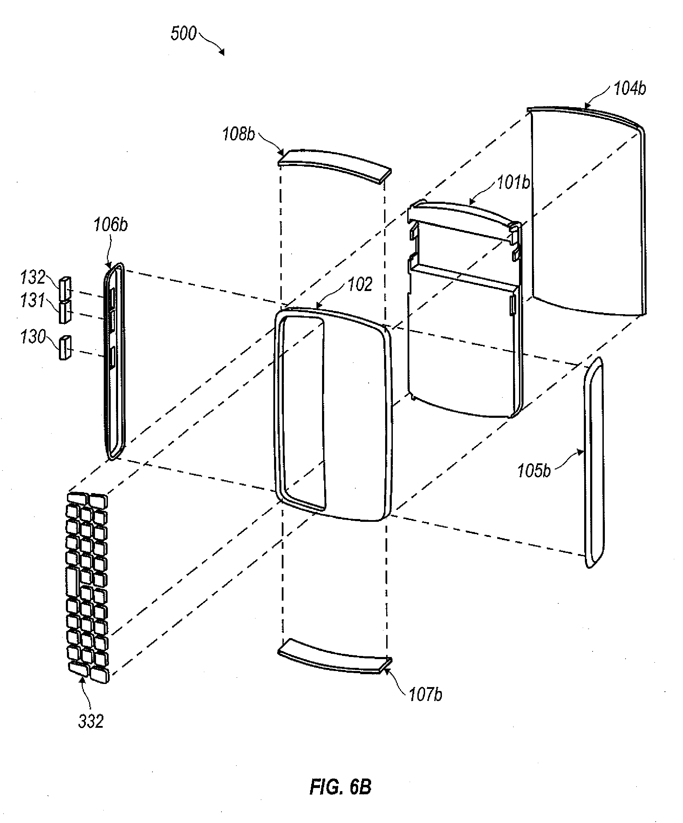

Referring now to FIGS. 1-5, 15, and 17, a handheld mobile communication device is generally illustrated by reference numeral 300. In the embodiment illustrated in FIG. 6A, the top member 400 includes a front side element 103a, rear side element 104a, top side element 108a, bottom side element 107a, and lateral sides element 105a, 106a. The top member 400 also includes the auxiliary navigation unit 328 with trackball 150, outer removable ring 123, and inner removable ring 122. The trackball 150 can be removed without removal of the navigational tool 328. The removal of the trackball 150 is enabled through the use of the outer removable ring 123 and the inner removable ring 122. These rings 122, 123 ensure that the navigation tool 328 and the trackball 150 are properly held in place against the support frame 101a. The top member 400 also includes buttons 28a, 28b, 28c, 28d, which may be left and right "mouse" buttons, telephone buttons for initiating or ending a telephone call, keyboard buttons, etc., as well as USB port 133 for among other things, providing power to the device, charging a battery, or transferring data to/from another electronic device, and a power-button 134. It should be appreciated by those having skill in the art that while the illustrated embodiment shows the input buttons 28a, 28b, 28c, 28d as being integrally independent and separate from one another, such buttons 28a, 28b, 28c, 28d may be interconnected with one another. Additionally, the navigation tool 328 can be circular or substantially rectangular and have corresponding circular or rectangular navigation buttons. Other shapes are contemplated, e.g. square, diamond, and the like. FIG. 6B shows the bottom member 500 includes a rear side element 104b, top side element 108b, bottom side element 107b, lateral side elements 105b, 106b, center plate 101b, and keyboard plate 102. Buttons 130, 131, 132, as well as the keyboard 332, are also part of the bottom member 500.

It should also be appreciated that while a navigation tool (auxiliary input) 328 has been described herein for causing movement of a cursor in upward, downward, leftward and rightward directions, the overall device 300 can be configured to allow diagonal movement of a cursor (not shown). Alternatively, the navigation tool (auxiliary input) 328 can be configured for rotational movement such that clockwise/counterclockwise rotation thereof causes downward or upward movement of a corresponding cursor displayed on the electronic graphical display 322. Thus, it is seen that a navigation tool (auxiliary input) 328 for a handheld mobile communication device 300 is efficiently obtained. While various features of a navigation tool (auxiliary input) 328 for a handheld mobile communication device 300 have been disclosed herein in combination with one another, it should be understood that the various features may be used singly or in any combination with one another. Additionally, the embodiments described herein are intended to merely serve as examples of a navigation tool (auxiliary input) 328 for a handheld mobile communication device 300 and it is intended that the instant disclosure enables those skilled in the art to make and use the disclosed embodiments as well as embodiments not explicitly recited herein, but which are encompassed by the appended claims. The intended scope of the claims, thus, includes the disclosed embodiments as well as embodiments not explicitly described in the instant disclosure, but which embodiments do not differ, or differ insubstantially, from the literal language of the appended claims.

Further aspects of the environments, devices and methods of employment described hereinabove are expanded upon in the following details. An exemplary embodiment of the handheld electronic device 300 in portrait orientation 600 as shown in FIGS. 1A and 1B, can be cradled in the palm of a user's hand. The size of the device 300 is such that a user is capable of operating the device 300 using the same hand that is holding the device 300. In a preferred embodiment, the user is capable of actuating all features of the device 300 using the thumb of the cradling hand. The user may also hold the device 300 in such a manner to enable two-thumb typing on the device 300. Furthermore, the user may use fingers rather than thumbs to actuate the keys on the device 300. In order to accommodate palm-cradling of the device 300 by the average person, it is longer in height (as shown in FIG. 1A) than it is wide, and the width is preferably between approximately two and three inches, but in no way is limited to such dimensions.

The input portion includes a plurality of keys that can be of a physical nature such as actuable buttons or they can be of a software nature, typically constituted by virtual representations (not illustrated) of physical keys on a display screen 322(referred to herein as "software keys"). It is also contemplated that the user input can be provided as a combination of the two types of keys. Each key of the plurality of keys has at least one actuable action which can be the input of a character, a command or a function. In this context, "characters" are contemplated to exemplarily include alphabetic letters, language symbols, numbers, punctuation, insignias, icons, pictures, and even a blank space. Input commands and functions can include such things as delete, backspace, moving a cursor up, down, left or right, initiating an arithmetic function or command, initiating a command or function specific to an application program or feature in use, initiating a command or function programmed by the user and other such commands and functions that are well known to those persons skilled in the art. Specific keys or other types of input devices can be used to navigate through the various applications and features thereof. Further, depending on the application or feature in use, specific keys can be enabled or disabled.

In the case of physical keys, all or a portion of the plurality of keys have one or more indicia displayed at their top surface and/or on the surface of the area adjacent the respective key, the particular indicia representing the character(s), command(s) and/or function(s) typically associated with that key. In the instance where the indicia of a key's function is provided adjacent the key, it is understood that this may be a permanent insignia that is, for instance, printed on the device cover beside the key, or in the instance of keys located adjacent the display screen 322, a current indicia for the key may be temporarily shown nearby the key on the screen 322.

In the case of software keys, the indicia for the respective keys are shown on the display screen 322, which in one embodiment is enabled by touching the display screen 322, for example, with a stylus to generate the character or activate the indicated command or function. Such display screens 322 may include one or more touch interfaces, including a touchscreen. A non-exhaustive list of touchscreens includes, for example, resistive touchscreens, capacitive touchscreens, projected capacitive touchscreens, infrared touchscreens and surface acoustic wave (SAW) touchscreens.

Physical and software keys can be combined in many different ways as appreciated by those skilled in the art. In one embodiment, physical and software keys are combined such that the plurality of enabled keys for a particular application or feature of the handheld electronic device 300 is shown on the display screen 322 in the same configuration as the physical keys. Thus, the desired character, command or function is obtained by depressing the physical key corresponding to the character, command or function displayed at a corresponding position on the display screen 322, rather than touching the display screen 322. To aid the user, indicia for the characters, commands and/or functions most frequently used are preferably positioned on the physical keys and/or on the area around or between the physical keys. In this manner, the user can more readily associate the correct physical key with the character, command or function displayed on the display screen 322.

The various characters, commands and functions associated with keyboard typing in general are traditionally arranged using various conventions. The most common of these in the United States, for instance, is the QWERTY keyboard layout. Others include the QWERTZ, AZERTY, and Dvorak keyboard configurations of the English-language alphabet.

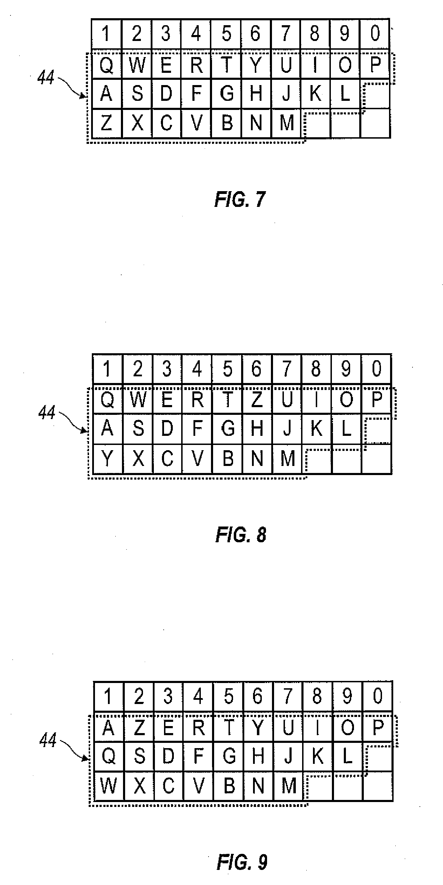

The QWERTY keyboard layout is the standard English-language alphabetic key arrangement 44 (see FIG. 7). In this configuration, Q, W, E, R, T and Y are the letters on the top left, alphabetic row. It was designed by Christopher Sholes, who invented the typewriter. The keyboard layout was organized by him to prevent people from typing too fast and jamming the keys. The QWERTY layout was included in the drawing for Sholes' patent application in 1878.

The QWERTZ keyboard layout is normally used in German-speaking regions. This alphabetic key arrangement 44 is shown in FIG. 8. In this configuration, Q, W, E, R, T and Z are the letters on the top left, alphabetic row. It differs from the QWERTY keyboard layout by exchanging the "Y" with a "Z". This is because "Z" is a much more common letter than "Y" in German and the letters "T" and "Z" often appear next to each other in the German language.

The AZERTY keyboard layout is normally used in French-speaking regions. This alphabetic key arrangement 44 is shown in FIG. 9. In this configuration, A, Z, E, R, T and Y are the letters on the top left, alphabetic row. It is similar to the QWERTY layout, except that the letters Q and A are swapped, the letters Z and W are swapped, and the letter M is in the middle row instead of the bottom one.

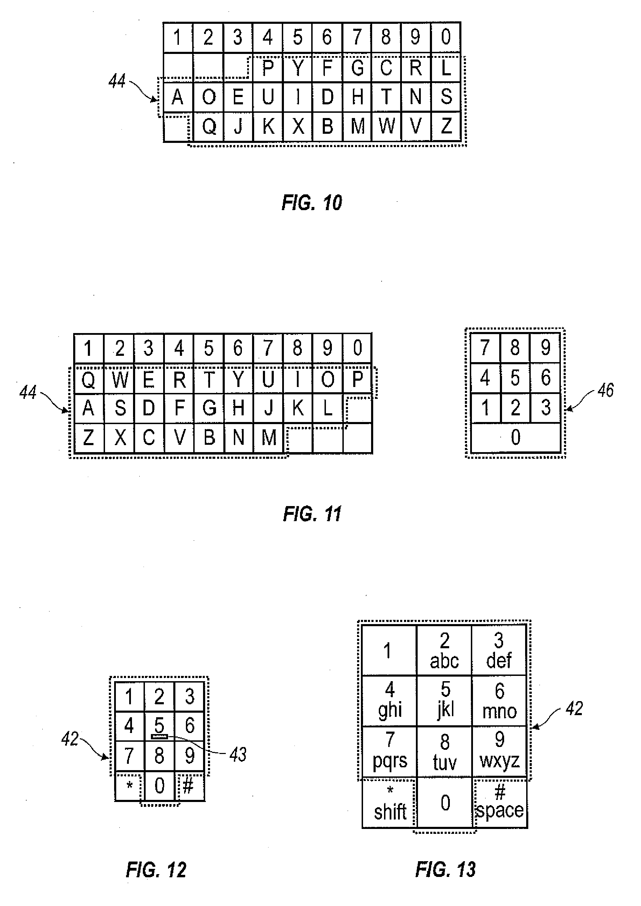

The Dvorak keyboard layout was designed in the 1930s by August Dvorak and William Dealey. This alphabetic key arrangement 44 is shown in FIG. 10. It was developed to allow a typist to type faster. About 70% of words are typed on the home row compared to about 32% with a QWERTY keyboard layout, and more words are typed using both hands. It is said that in eight hours, fingers of a QWERTY typist travel about 16 miles, but only about 1 mile for the Dvorak typist.

Alphabetic key arrangements in full keyboards and typewriters are often presented along with numeric key arrangements. An exemplary numeric key arrangement is shown in FIGS. 7-10 where the numbers 1-9 and 0 are positioned above the alphabetic keys. In another known numeric key arrangement, numbers share keys with the alphabetic characters, such as the top row of the QWERTY keyboard. Yet another exemplary numeric key arrangement is shown in FIG. 11, where a numeric keypad 46 is spaced from the alphabetic/numeric key arrangement. The numeric keypad 46 includes the numbers "7", "8", "9" arranged in a top row, "4", "5", "6" arranged in a second row, "1", "2", "3" arranged in a third row, and "0" in a bottom row, consistent with what may be found on a known "ten-key" computer keyboard keypad. Additionally, a numeric phone key arrangement 42 is also known, as shown in FIG. 12.

As shown in FIG. 12, the numeric phone key arrangement 42 may also utilize a surface treatment on the surface of the center "5" key. This surface treatment is such that the surface of the key is distinctive from the surface of other keys. Preferably the surface treatment is in the form of a raised bump or recessed dimple 43. This bump or dimple 43 is typically standard on telephones and is used to identify the "5" key through touch alone. Once the user has identified the "5" key, it is possible to identify the remainder of the phone keys through touch alone because of their standard placement. The bump or dimple 43 preferably has a shape and size that is readily evident to a user through touch. An example bump or dimple 43 may be round, rectangular, or have another shape if desired. Alternatively, raised bumps may be positioned on the housing around the "5" key and do not necessarily have to be positioned directly on the key, as known by those of skill in the art.

Handheld electronic devices 300 that include a combined text-entry keyboard and a telephony keyboard are also known. Examples of such mobile communication devices include mobile stations, cellular telephones, wireless personal digital assistants (PDAs), two-way paging devices, and others. Various keyboards are used with such devices depending in part on the physical size of the handheld electronic device 300. Some of these are termed full keyboard, reduced keyboard, and phone key pads.

In embodiments of a handheld electronic device 300 having a full keyboard, only one alphabetic character is associated with each one of a plurality of physical keys. Thus, with an English-language keyboard, there are at least 26 keys in the plurality, one for each letter of the English alphabet. In such embodiments using the English-language alphabet, one of the keyboard layouts described above is usually employed, and with the QWERTY keyboard layout being the most common.

One device that uses a full keyboard for alphabetic characters and incorporates a combined numeric keyboard is shown in FIGS. 1E. In this device, numeric characters share keys with alphabetic characters on the top row of the QWERTY keyboard. This device utilizes numeric characters 1-9 in a numeric phone key arrangement consistent with the ITU Standard E.161, as shown in FIG. 13. The numeric characters share keys with alphabetic characters on the left side of the keyboard 332.

Various embodiments of the full keyboard 332 layout are depicted on FIGS. 1C, 1D, 1E and illustrated in detail in FIG. 14. The alphabetic keys, otherwise described as the set of keys with alphabetic characters, a widthwise elongate space key 135, and two non-alphabetic keys 137, 138 are collectively arranged in a rectangular layout 136. The width of the rectangular layout 136 is approximately three times the height of the rectangular layout 136. The rectangular layout 136 is comprised of three rows 142, 144, 146 of keys. The first row 142 includes "Q/1", "W/2", "E/3", "R/4", "T/5", "Y/6", "U/7", "I/8", "O/9", "P/0" keys. The second row 144 includes the "A", "S", "D", "F", "G", "H", "J/4", "K/5", "L/6", and "./," 138 keys. The third row 146 includes the "Z", "X", "C", "V", "space" 135, "B/1", "N/2", "M/3", and "#" 137 keys. The space key 135, which has a width approximately two times greater than the width of an alphabetic key, is arranged in the bottom row of keys with an alphabetic key flanking each of the two lateral ends of the space key 135. Specifically in the third row 146, the space key 135 is flanked on the left-hand lateral end by an alphabetic key associated with the alphabetic character V and on the right-hand lateral end by an alphabetic key associated with the alphabetic character B. To further expand on the third row 146, the space key 135 could be flanked on the left-hand lateral end by a series of alphabetic keys associated with the alphabetic characters Z, X, C, and V and on the right-hand lateral end by a series of alphabetic keys associated with alphabetic characters B, N, and M. The rectangular layout 136 is similarly flanked by two function keys 140, 141, with each one positioned essentially directly above the other. Specifically, these two function keys comprise the "return/enter" key 141 and the "delete" key 140.

In order to further reduce the size of a handheld electronic device 300 without making the physical keys or software keys too small, some handheld electronic devices 300 use a reduced keyboard, where more than one character/command/function is associated with each of at least a portion of the plurality of keys. A reduced keyboard and detailed view of a reduced key arrangement are illustrated in FIGS. 15 and 16, respectively. This results in certain keys being ambiguous since more than one character is represented by or associated with the key, even though only one of those characters is typically intended by the user when activating the key.

Thus, certain software usually runs on the processor 338 of these types of handheld electronic devices 300 to determine or predict what letter or word has been intended by the user. Predictive text technologies can also automatically correct common spelling errors. Predictive text methodologies often include a disambiguation engine and/or a predictive editor application. This helps facilitate easy spelling and composition, since the software is preferably intuitive software with a large word list and the ability to increase that list based on the frequency of word usage.

The software preferably also has the ability to recognize character letter sequences that are common to the particular language, such as, in the case of English, words ending in "ing." Such systems can also "learn" the typing style of the user making note of frequently used words to increase the predictive aspect of the software. With predictive editor applications, the display 322 of the device 300 depicts possible character sequences corresponding to the keystrokes that were entered. Typically, the most commonly used word is displayed first. The user may select other, less common words manually, or otherwise. Other types of predictive text computer programs may be utilized with the keyboard arrangement and keyboard 322 described herein, without limitation.

The multi-tap method of character selection has been in use a number of years for permitting users to enter text using a touch screen device or a conventional telephone key pad such as specified under ITU E 1.161, among other devices. Multi-tap requires a user to press a key a varying number of times, generally within a limited period of time, to input a specific letter, thereby spelling the desired words of the message. A related method is the long tap method, where a user depresses the key until the desired character appears on the display out of a rotating series of letters.

A "text on nine keys" type system uses predictive letter patterns to allow a user to ideally press each key representing a letter only once to enter text. Unlike multi-tap which requires a user to indicate a desired character by a precise number of presses of a key, or keystrokes, the "text on nine keys" system uses a predictive text dictionary and established letter patterns for a language to intelligently guess which one of many characters represented by a key that the user intended to enter. The predictive text dictionary is primarily a list of words, acronyms, abbreviations and the like that can be used in the composition of text.

Generally, all possible character string permutations represented by a number of keystrokes entered by a user are compared to the words in the predictive text dictionary and a subset of the permutations is shown to the user to allow selection of the intended character string. The permutations are generally sorted by likelihood of occurrence which is determined from the number of words matched in the predictive text dictionary and various metrics maintained for these words. Where the possible character string permutations do not match any words in the predictive text dictionary, the set of established letter patterns for a selected language can be applied to suggest the most likely character string permutations, and then require the user to input a number of additional keystrokes in order to enter the desired word.

The keys of reduced keyboards are laid out with various arrangements of characters, commands and functions associated therewith. In regards to alphabetic characters, the different keyboard layouts identified above are selectively used based on a user's preference and familiarity; for example, the QWERTY keyboard layout is most often used by English speakers who have become accustomed to the key arrangement. FIG. 15 shows a handheld electronic device 300 that carries an example of a reduced keyboard 332 using the QWERTY keyboard layout.

A detailed view of a reduced keyboard arrangement 332 is presented in FIG. 16. Fourteen keys on the keyboard 332 are associated with alphabetic characters and ten keys are associated with numbers. There exists three rows on this keyboard 332. Some of the keys have different sizes than the other keys. In particular, the rows are rectangular shaped, with the middle key in the third row being the largest key on the keyboard 332. The columns are generally straight, but the outer three columns angle slightly inwardly toward the two central columns. In the first row, the keys with alphabetic characters are "QW", "ER/1", "TY/2", "UI/3", and "OP/4". In the second row, the keys with alphabetic characters are "AS/,", "DF/5", "GH/6", "JK/7", and "L/8". In the third row, the keys with alphabetic characters are "ZX/sym", "CV/9", "space/0", "BN/.", and "M".

Another embodiment of a reduced alphabetic keyboard is found on a standard phone keypad. Most handheld electronic devices 300 having a phone key pad also typically include alphabetic key arrangements overlaying or coinciding with the numeric keys as shown in FIG. 13. Such alphanumeric phone keypads are used in many, if not most, traditional handheld telephony mobile communication devices such as cellular handsets.

As described above, the International Telecommunications Union ("ITU") has established phone standards for the arrangement of alphanumeric keys. The standard phone numeric key arrangement shown in FIGS. 12 (no alphabetic letters) and 13 (with alphabetic letters) corresponds to ITU Standard E.161, entitled "Arrangement of Digits, Letters, and Symbols on Telephones and Other Devices That Can Be Used for Gaining Access to a Telephone Network." This standard is also known as ANSI TI.703-1995/1999 and ISO/IEC 9995-8:1994. Regarding the numeric arrangement, it can be aptly described as a top-to-bottom ascending order three-by-three-over-zero pattern.

The table below identifies the alphabetic characters associated with each number for some other phone keypad conventions.

| Number on Key | ITU E.161 | Australia | Mobile Phone Keypad | | |
|---|---|---|---|---|---|
| | | | #1 | #11 (Europe) | #111 (Europe) |
| 1 | | QZ | | ABC | ABC |
| 2 | ABC | ABC | ABC | DEF | DEF |
| 3 | DEF | DEF | DEF | GHI | GHI |
| 4 | GHI | GHI | GHI | JKL | JKL |
| 5 | JKL | JKL | JKL | MNO | MNO |
| 6 | MNO | MNO | MN | PQR | PQR |
| 7 | PQRS | PRS | PRS | STU | STU |
| 8 | TUV | TUV | TUV | UVW | VWX |
| 9 | WXYZ | WXY | WXY | XYZ | YZ |
| 0 | | | OQZ | | |

It should also be appreciated that other alphabetic character and number combinations can be used beyond those identified above when deemed useful to a particular application.

As noted earlier, multi-tap software has been in use for a number of years permitting users to enter text using a conventional telephone key pad such as specified under ITU E 1.161 or on a touch screen display, among other devices. Multi-tap requires a user to press a key a varying number of times, generally within a limited period of time, to input a specific letter associated with the particular key, thereby spelling the desired words of the message. A related method is the long tap method, where a user depresses the key until the desired character appears on the display.

The assembly drawings of the handheld communication device are shown in FIGS. 6A and 6B and cooperation of the device in a wireless network is exemplified in the block diagram of FIG. 17. These figures are exemplary only, and those persons skilled in the art will appreciate the additional elements and modifications necessary to make the device 300 work in particular network environments.

Between FIGS. 6A and 6B, the typical components found in the assembly of the handheld electronic device 300 are depicted. FIGS. 6A and 6B serve as a general illustration of an assembly for a handheld communication device 300 and are not to be considered preferred embodiments for the disclosures in this application. The construction of the device 300 benefits from various manufacturing simplifications. The keyboard 332 is constructed from a single piece of material, and in a preferred embodiment is made from plastic. The keyboard 332 sits over dome switches (not shown) located on the center plate 101b in a preferred embodiment. One switch is provided for every key on the keyboard 332 in the preferred embodiment, but in other embodiments, more than one switch or less than one switch per key are possible configurations. The keyboard plate 102 holds the keyboard 332 and the support frame 101a holds the navigation tool 328. The support frame 101a also provides an attachment point for the display 322 (not shown). A lens (not shown) within the front side element 103a covers the display 322 to prevent damage. When assembled, the keyboard plate 102 and the center plate 101b are fixedly attached to each other and the display 322 is positioned between the front side element 103a and rear side element 104a.

A serial port (preferably a Universal Serial Bus port) 133 is fixedly attached to the support frame 101a and further held in place by right side element 105a and left side element 106a. Buttons 130, 131, 132 are attached to switches (not shown), which are connected to the center plate 101b.

Final assembly for the top member 400 involves placing the top side element 108a and bottom side element 107a in contact with support frame 101a. Furthermore, the assembly interconnects right side element 105a and left side element 106a with the support frame 101a and lens on front element 103a. These lateral side elements 105a, 106a provide additional protection and strength to the support structure of the device 300. In a preferred embodiment, rear element 104a is removably attached to the other elements of the device 300. Final assembly for the bottom member 500 is similar to that of the top member 400. Specifically, the top side 108b and bottom side 107b are in contact with the center plate 101b. The right side element 105b and left side element 106b or lateral sides 105b, 106b are connected with the keyboard plate 102 and center plate 101b. The rear element 104b is connected to the center plate 101b and the keyboard 332 fits within the keyboard plate 102. With each member 400, 500 assembled, the top member 400 is attached to the bottom member 500 such that the display screen 322 is never hidden. From a landscape perspective, the two members 400, 500 are connected such that the bottom member 500 can slide perpendicular to the long axis 420 of the device 300 so that its keyboard 332 is exposed beneath the display screen 322.

The block diagram of FIG. 17, representing the communication device 300 interacting in the communication network 319, shows the device's 300 inclusion of a microprocessor 338 which controls the operation of the device 300. The communication subsystem 311 performs all communication transmission and reception with the wireless network 319. The microprocessor 338 further connects with an auxiliary input/output (I/O) subsystem 328, a serial port (preferably a Universal Serial Bus port) 330, a display 322, a keyboard 332, a speaker 334, a microphone 336, random access memory (RAM) 326, and flash memory 324. Other communications subsystems 340 and other device subsystems 342 are generally indicated as connected to the microprocessor 338 as well. An example of a communication subsystem 340 is that of a short range communication subsystem such as BLUETOOTH® communication module or an infrared device and associated circuits and components. Additionally, the microprocessor 338 is able to perform operating system functions and preferably enables execution of software applications on the communication device 300.

The above described auxiliary I/O subsystem 328 can take a variety of different subsystems including the above described navigation tool 328. As previously mentioned, the navigation tool (auxillary input) 328 is an ergonomic cursor navigation controller. Other auxiliary I/O devices can include external display devices and externally connected keyboards (not shown). While the above examples have been provided in relation to the auxiliary I/O subsystem 328, other subsystems capable of providing input or receiving output from the handheld electronic device 300 are considered within the scope of this disclosure.

In a preferred embodiment, the communication device 300 is designed to wirelessly connect with a communication network 319. Some communication networks that the communication device 300 may be designed to operate on require a subscriber identity module (SIM) or removable user identity module (RUIM). Thus, a device 300 intended to operate on such a system will include SIM/RUIM interface 344 into which the SIM/RUIM card (not shown) may be placed. The SIM/RUIM interface 344 can be one in which the SIM/RUIM card is inserted and ejected.

In an exemplary embodiment, the flash memory 324 is enabled to provide a storage location for the operating system, device programs, and data. While the operating system in a preferred embodiment is stored in flash memory 324, the operating system in other embodiments is stored in read-only memory (ROM) or similar storage element (not shown). As those skilled in the art will appreciate, the operating system, device application or parts thereof may be loaded in RAM 326 or other volatile memory.

In a preferred embodiment, the flash memory 324 contains programs/applications 358 for execution on the device 300 including an address book 352, a personal information manager (PIM) 354, and the device state 350. Furthermore, programs 358 and other information 356 can be segregated upon storage in the flash memory 324 of the device 300. However, another embodiment of the flash memory 324 utilizes a storage allocation method such that a program 358 is allocated additional space in order to store data associated with such program. Other known allocation methods exist in the art and those persons skilled in the art will appreciate additional ways to allocate the memory of the device 300.

In a preferred embodiment, the device 300 is pre-loaded with a limited set of programs that enable it to operate on the communication network 319. Another program that can be preloaded is a PIM 354 application that has the ability to organize and manage data items including but not limited to email, calendar events, voice messages, appointments and task items. In order to operate efficiently, memory 324 is allocated for use by the PIM 354 for the storage of associated data. In a preferred embodiment, the information that PIM 354 manages is seamlessly integrated, synchronized and updated through the communication network 319 with a user's corresponding information on a remote computer (not shown). The synchronization, in another embodiment, can also be performed through the serial port 330 or other short range communication subsystem 340. Other applications may be installed through connection with the wireless network 319, serial port 330 or via other short range communication subsystems 340.

When the device 300 is enabled for two-way communication within the wireless communication network 319, it can send and receive signals from a mobile communication service. Examples of communication systems enabled for two-way communication include, but are not limited to, the MOBITEX mobile communication system, DATATAC mobile communication system, the GPRS (General Packet Radio Service) network, the UMTS (Universal Mobile Telecommunication Service) network, the EDGE (Enhanced Data for Global Evolution) network, and the CDMA (Code Division Multiple Access) network and those networks generally described as packet-switched, narrowband, data-only technologies mainly used for short burst wireless data transfer.

For the systems listed above, the communication device 300 must be properly enabled to transmit and receive signals from the communication network 319. Other systems may not require such identifying information. A GPRS, UMTS, and EDGE require the use of a SIM (Subscriber Identity Module) in order to allow communication with the communication network 319. Likewise, most CDMA systems require the use of a RUIM (Removable Identity Module) in order to communicate with the CDMA network. The RUIM and SIM card can be used in multiple different communication devices 300. The communication device 300 may be able to operate some features without a SIM/RUIM card, but it will not be able to communicate with the network 319. In some locations, the communication device 300 will be enabled to work with special services, such as "911" emergency, without a SIM/RUIM or with a non-functioning SIM/RUIM card. A SIM/RUIM interface 344 located within the device allows for removal or insertion of a SIM/RUIM card (not shown). This interface 344 can be configured like that of a disk drive or a PCMCIA slot or other known attachment mechanism in the art. The SIM/RUIM card features memory and holds key configurations 351, and other information 353 such as identification and subscriber related information. Furthermore, a SIM/RUIM card can be enabled to store information about the user including identification, carrier and address book information. With a properly enabled communication device 300, two-way communication between the communication device 300 and communication network 319 is possible.

If the communication device 300 is enabled as described above or the communication network 319 does not require such enablement, the two-way communication enabled device 300 is able to both transmit and receive information from the communication network 319. The transfer of communication can be from the device 300 or to the device 300. In order to communicate with the communication network 319, the device 300 in a preferred embodiment is equipped with an integral or internal antenna 318 for transmitting signals to the communication network 319. Likewise the communication device 300 in the preferred embodiment is equipped with another antenna 316 for receiving communication from the communication network 319. These antennae 316, 318 in another preferred embodiment are combined into a single antenna (not shown). As one skilled in the art would appreciate, the antenna or antennae 316, 318 in another embodiment are externally mounted on the device 300.

When equipped for two-way communication, the communication device 300 features a communication subsystem 311. As is well known in the art, this communication subsystem 311 is modified so that it can support the operational needs of the device 300. The subsystem 311 includes a transmitter 314 and receiver 312 including the associated antenna or antennae 316, 318 as described above, local oscillators (LOs) 313, and a processing module 320 which in a preferred embodiment is a digital signal processor (DSP) 320.

A signal received by the communication device 300 is first received by the antenna 316 and then input into a receiver 312, which in a preferred embodiment is capable of performing common receiver functions including signal amplification, frequency down conversion, filtering, channel selection and the like, and analog to digital (A/D) conversion. The A/D conversion allows the DSP 320 to perform more complex communication functions such as demodulation and decoding on the signals that are received by DSP 320 from the receiver 312. The DSP 320 is also capable of issuing control commands to the receiver 312. An example of a control command that the DSP 320 is capable of sending to the receiver 312 is gain control, which is implemented in automatic gain control algorithms implemented in the DSP 320. Likewise, the communication device 300 is capable of transmitting signals to the communication network 319. The DSP 320 communicates the signals to be sent to the transmitter 314 and further communicates control functions, such as the above described gain control. The signal is emitted by the device 300 through an antenna 318 connected to the transmitter 314.

It is contemplated that communication by the device 300 with the wireless network 319 can be any type of communication that both the wireless network 319 and device 300 are enabled to transmit, receive and process. In general, these can be classified as voice and data. Voice communication is communication in which signals for audible sounds are transmitted by the device 300 through the communication network 319. Data is all other types of communication that the device 300 is capable of performing within the constraints of the wireless network 319.

In the instance of voice communications, voice transmissions that originate from the communication device 300 enter the device 300 though a microphone 336. The microphone 336 communicates the signals to the microprocessor 338 for further conditioning and processing. The microprocessor 338 sends the signals to the DSP 320 which controls the transmitter 314 and provides the correct signals to the transmitter 314. Then, the transmitter 314 sends the signals to the antenna 318, which emits the signals to be detected by a communication network 319. Likewise, when the receiver 312 obtains a signal from the receiving antenna 316 that is a voice signal, it is transmitted to the DSP 320 which further sends the signal to the microprocessor 338. Then, the microprocessor 338 provides a signal to the speaker 334 of the device 300 and the user can hear the voice communication that has been received. The device 300 in a preferred embodiment is enabled to allow for full duplex voice transmission.

In another embodiment, the voice transmission may be received by the communication device 300 and translated as text to be shown on the display screen 322 of the communication device 300. The communication device 300 is also capable of retrieving messages from a voice messaging service operated by the communication network operator. In a preferred embodiment, the device 300 displays information in relation to the voice message, such as the number of voice messages or an indication that a new voice message is present on the operating system.

In a preferred embodiment, the display 322 of the communication device 300 provides an indication about the identity of an incoming call, duration of the voice communication, telephone number of the communication device, call history, and other related information. It should be appreciated that the above described embodiments are given as examples only and one skilled in the art may effect alterations, modifications and variations to the particular embodiments without departing from the scope of the application.

As stated above, the communication device 300 and communication network 319 can be enabled to transmit, receive and process data. Several different types of data exist and some of these types of data will be described in further detail. One type of data communication that occurs over the communication network 319 includes electronic mail (email) messages. Typically an email is text based, but can also include other types of data such as picture files, attachments and html. While these are given as examples, other types of messages are considered within the scope of this disclosure as well.

When the email originates from a source outside of the device and is communicated to the device 300, it is first received by the receiving antenna 316 and then transmitted to the receiver 312. From the receiver 312, the email message is further processed by the DSP 320, and it then reaches the microprocessor 338. The microprocessor 338 executes instructions as indicated from the relevant programming instructions to display, store or process the email message as directed by the program. In a similar manner, once an email message has been properly processed by the microprocessor 338 for transmission to the communication network 319, it is first sent to the DSP 320, which further transmits the email message to the transmitter 314. The transmitter 314 processes the email message and transmits it to the transmission antenna 318, which broadcasts a signal to be received by a communication network 319. While the above has been described generally, those skilled in this art will appreciate those modifications which are necessary to enable the communication device 300 to properly transmit the email message over a given communication network 319.

Furthermore, the email message may instead be transmitted from the device 300 via a serial port 330, another communication port 340, or other wireless communication ports 340. The user of the device 300 can generate a message to be sent using the keyboard 332 and/or auxiliary I/O 328, and the associated application to generate the email message. Once the email message is generated, the user may execute a send command which directs the email message from the communication device 300 to the communication network 319. In an exemplary embodiment, a keyboard 332, preferably an alphanumeric keyboard, is used to compose the email message. In a preferred embodiment, an auxiliary I/O device 328 is used in addition to the keyboard 332.

While the above has been described in relation to email messages, one skilled in the art could easily modify the procedure to function with other types of data such as SMS text messages, internet websites, videos, instant messages, programs and ringtones. Once the data is received by the microprocessor 338, the data is placed appropriately within the operating system of the device 300. This might involve presenting a message on the display 322 which indicates the data has been received or storing it in the appropriate memory 324 on the device 300. For example, a downloaded application such as a game will be placed into a suitable place in the flash memory 324 of the device 300. The operating system of the device 300 will also allow for appropriate access to the new application as downloaded.

Exemplary embodiments have been described hereinabove regarding handheld electronic devices 300 and wireless handheld communication devices 300 as well as the communication networks 319 within which they cooperate. It should be appreciated, however, that the focus of the present disclosure is for a hybrid portrait-landscape handheld mobile communication device 300 with trackball navigation 328 and QWERTY hideaway keyboard 332.

## Claims

1. A handheld communication device capable of transmitting and receiving at least voice and text messages, said device comprising:
a display bearing component and a keyboard bearing component, said keyboard and display bearing components being substantially planar and oblong in shape and interconnected by a coupling connection that maintains the components in a substantially parallel orientation and which accommodates relative movement between the components;
said device having an overlaid configuration in which said display bearing component is located substantially directly over said keyboard bearing component and in substantial registration therewith and an expanded configuration in which said keyboard bearing component has been moved out from under said display bearing component with a keyboard exposed for operator use, said keyboard being concealed from view and use in said overlaid configuration;
said display bearing component comprising an oblong shaped display screen exposed at a front face of said device and said display screen having a height greater than a width thereof when said device is held in a portrait orientation and a width greater than a height thereof when said device is held in a landscape orientation, said landscape and portrait orientations being transitioned between by ninety degree rotation of the device by the operator; and
a trackball navigational tool exposed at said front face of said device and located adjacent said display screen and proximate a narrow end of said display component, said trackball configured to affect cursor navigation on said display screen by an operator during use.

2. The device as recited in claim 1, wherein said trackball navigational tool is positioned below said display screen at said front face of said device in said portrait orientation.

3. The device as recited in claim 1, further comprising icons representative of available device functions being presented on said display screen and oriented with an upright axis thereof substantially parallel with a long-axis of said device when said device is held in said portrait orientation.

4. The device as recited in claim 1, further comprising icons representative of available device functions being presented on said display screen and oriented with an upright axis thereof substantially perpendicular to a long-axis of said device when said device is held in said landscape orientation.

5. The device as recited in claim 2, wherein said device is configured for operation in a voice communication mode when in said portrait orientation.

6. The device as recited in claim 2, wherein said device is configured for operation in a text messaging mode when in said landscape orientation with said keyboard exposed to the operator below said display screen and wherein said trackball navigational tool is positioned to the right of said display screen.

7. The device as recited in claim 6, wherein said device is configured for operation in a voice communication mode when in said portrait orientation with said keyboard concealed from operator access.

8. The device as recited in claim 7, wherein said device operates in said voice communication mode when said keyboard is concealed from operator access.

9. The device as recited in claim 7, wherein said device operates in said text messaging mode when said keyboard is exposed for operator utilization.

10. The device as recited in claim 1, wherein said coupling connection limits movement between said keyboard bearing component and said display bearing component to linear translational movement.

11. The device as recited in claim 1, wherein said keyboard has a width greater than a height thereof in the landscape orientation and comprises a plurality of keys that include a widthwise elongate space key and a set of alphabetic keys with which QWERTY-arranged alphabetic characters are associated, said space key being arranged in a row of keys with an alphabetic key flanking each of two lateral ends of said space key.

12. The device as recited in claim 11, wherein said alphabetic keys and said space key are arranged exclusively in three rows of keys.

13. The device as recited in claim 11, wherein said space key has a width approximately two time greater than a width of the alphabetic keys.

14. The device as recited in claim 11, wherein said space key is located in a bottom row of keys.

15. The device as recited in claim 11, wherein said space key is flanked on a left-hand lateral end by an alphabetic key with which the alphabetic character V is associated and said space key is flanked on a right-hand lateral end by an alphabetic key with which the alphabetic character B is associated, said space key and said alphabetic keys which the alphabetic characters V and B are associated being arranged in a common row.

16. The device as recited in claim 11, wherein said space key is flanked on a left-hand lateral end by a series of alphabetic keys with which the alphabetic characters Z, X, C, and V are associated and said space key is flanked on a right-hand lateral end by a series of alphabetic keys with which the alphabetic characters B, N and M are associated, said space key and said alphabetic keys with which the alphabetic characters Z, X, C, V, B, N and M are associated being arranged in a common row.

17. The device as recited in claim 11, wherein said set of alphabetic keys, said space key and two non-alphabetic keys are collectively arranged in a rectangular layout having a width and a height, said width of the rectangular layout being approximately three times the height of the rectangular layout.

18. The device as recited in claim 17, wherein the rectangular layout of said set of alphabetic keys, said space key and said two non-alphabetic keys is flanked by two function keys, one positioned essentially directly above the other.

19. The device as recited in claim 18, wherein the two function keys comprise a return key and a delete key.

20. The device as recited in claim 11, wherein said space key and said set of alphabetic keys, exclusive of an alphabetic key associated with the alphabetic character P, are arranged in a rectangular layout having a width and a height, said width of the rectangular layout being essentially equal to three times the height of the rectangular layout.
